# EUROPEAN PATENT SPECIFICATION

(11) **EP 4 501 567 B1**
(45) Date of publication and mention of the grant of the patent: **18.02.2026**
(21) Application number: 24192222.8
(22) Date of filing: 01.08.2024
(51) Int. Cl.: B28B 23/00, E04G 15/06, H02G 3/12

(54) **INSTALLATION DEVICE TO BE ACCOMMODATED IN A CONCRETE COMPONENT**
INSTALLATIONSGERÄT ZUR AUFNAHME IN EINEM BETONBAUTEIL
DISPOSITIF D'INSTALLATION DESTINÉ À ÊTRE LOGÉ DANS UN COMPOSANT EN BÉTON

(30) Priority: 02.08.2023 NL 2035529
(43) Date of publication of application: 05.02.2025
(73) Proprietor: Attema B.V., 4203 NJ Gorinchem (NL)
(72) Inventor: SCHUMACHER, Paulus Michael Johannes, 5283 LN BOXTEL (NL)
(74) Representative: EP&C

(56) References cited:
- EP-A1- 4 296 451
- WO-A1-2015/140969
- CN-U- 215 955 971
- NL-A- 6 600 959

## Description

### FIELD OF THE INVENTION

The invention relates to the field of concrete casting, in particular to installation devices used with concrete casting. The invention further relates to an assembly of such an installation device and a magnetic unit. The invention yet further relates to a concrete casting system and to a method of casting a concrete component with an installation component.

### BACKGROUND OF THE INVENTION

In the construction of buildings, prefabrication is becoming more and more prominent. The ability to manufacture parts of a building at a manufacturing site and transporting the parts to a remote site where they are then used allows the construction time of buildings to decrease rapidly.

When prefabricating walls, wherein a wall may also be a ceiling or a floor, often concrete casting is used as a method. With concrete casting concrete is poured into a casting mold. An inside of the casting mold has the dimensions of a concrete component to be cast, such as a wall.

It is advantageous to provide an installation component in the casting mold prior to pouring of the concrete. This way the installation component is provided in the concrete component, thereby further reducing construction time on the remote site. The installation component may for example be an installation box, like an electrical installation box, a junction box, and an electrical junction box. The installation component may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

In order to provide the installation component at the correct location and in the correct position in the casting mold a magnetic coupling can be used. The magnetic coupling is achieved via a magnetic unit that is connected to the installation component on the one hand and with a ferromagnetic part of the casting mold on the other hand.

It is desired to reuse the magnetic unit for as many installation components as possible. A major problem however is that during the casting process the magnetic unit becomes dirty due to contact with liquid concrete. The liquid concrete that comes into contact with the magnetic unit hardens together with the rest of the liquid concrete in the casting mold. When the concrete component is removed from the casting mold, and the magnetic unit is retrieved, the hardened concrete on the magnetic unit has a negative effect on the further use thereof. The removal of the hardened concrete from the magnetic unit is time consuming and cost intensive. As a result, the lifespan of the magnetic unit becomes shorter than desired.

A further disadvantage is that the liquid concrete may end up between the magnetic unit and the ferromagnetic part of the casting mold. This occurs for example often during shaking or vibrating in order to compact the concrete. Concrete between the magnetic unit and the casting mold has a negative effect on the magnetic coupling force between the magnetic unit and the ferromagnetic part of the casting mold. In case it is desired that the magnetic unit remains coupled to the ferromagnetic part of the casting mold during removal of the cast component, the negative effect on the magnetic coupling force may be so severe that the magnetic unit is removed from the casting mold together with the cast component. This will generally result in the loss of the magnetic unit, because the magnetic unit will be transported with the cast component to the remote site.

CN215955971U1 discloses an installation device in accordance with the preamble of claim 1, in more detail it discloses a junction box and an assembly type prefabricated component. The junction box comprises a junction box body which is of a cylindrical structure with an opening at one end. The box cover is detachably connected with the open end of the junction box body, and one end of the box cover is provided with a mounting groove which can be detachably connected with a magnetic element. When the junction box is fixed on a mold table, the magnetic element can be arranged in the mounting groove, and the junction box can be directly adsorbed and fixed on the mold table through the magnetic element.

WO2015/140969 A1 discloses an insert fitting. The insert fitting comprises a cylinder body in which a screw hole is formed in the axial direction; a disc-shaped flange that intersects the screw hole and that is provided on the cylinder body so to close one end of the same; another cylinder body into which the cylinder body is inserted; a disc-shaped flange that is provided in parallel to the flange on a side face near the end of the cylinder body on a side in which the cylinder body is not inserted; an adhesion layer that is formed on an opposing face of the flange that, when installed on the deck plate, faces the top face of a deck plate; and a sheet magnet that is affixed to the opposing face of the flange via the adhesion layer.

EP4296451A1 is prior art falling under article 54(3) EPC and discloses a positioning element for positioning an installation part in a concrete segment to be cast on a metal formwork by means of a magnet arrangement. For this purpose, the positioning element comprises a base and a circumferential side wall, which together surround a first receiving space for receiving a magnet of the magnet arrangement, and a receiving opening opposite the base, through which the first receiving space is accessible. A tubular nozzle projects in an axial direction from a rear side of the base, which surrounds a second receiving space for holding a pin of the magnet arrangement. The second receiving space is accessible from the first receiving space through an opening in the base. Furthermore, the positioning element comprises at least one radially deformable tongue arranged in a wall of the nozzle for holding the pin.

### SUMMARY OF THE INVENTION

It would be desirable to at least partially remove the above drawbacks.

To better address one or more of these concerns, in a first aspect of the invention an installation device according to claim 1 is provided.

Closing off the first cavity via a contact between the first mold contact surface and the inner surface of the casting mold prevents air to escape from the first cavity. The first cavity has no other opening apart from the first cavity opening. This advantageously decreases the likelihood of an ingress of liquid concrete into the first cavity. Therefore, with the installation device according to the invention the magnetic unit may become less dirty and requires less cleaning. This improves the reusability of the magnetic unit.

Further, an ingress of liquid concrete between the magnet contact surface and the inner surface of the casting mold will be less, reducing the risk of losing the magnetic unit.

In an embodiment of the installation device, when the installation device is magnetically connected to the casting mold via the magnet contact surface, at least one layer of air extends around the magnetic unit, in particular completely around the magnetic unit, wherein the at least one layer of air is enclosed by the main body and the inner surface of the mold. If during the concrete casting process liquid concrete would enter the first cavity via the first cavity opening the layer of air is compressed. This compression of air limits a further ingress of liquid concrete into the first cavity, as the compressed air in a sense wants to push the liquid concrete out of the first cavity.

In an embodiment of the installation device,
- an inner circumference of the first mold contact surface is configured to be greater than an outer circumference of the magnet contact surface, such that, when the installation device is magnetically connected to the casting mold via the magnet contact surface, a layer of air extends around the magnetic unit and is enclosed in the first cavity by the inner surface of the mold.

If during the concrete casting process liquid concrete would enter the first cavity or the at least one additional cavity the layer of air enclosed therein is compressed. This compression of air limits a further ingress of liquid concrete into the first cavity or the at least one additional cavity, as the compressed air in a sense wants to push the liquid concrete out of the first cavity or at least one cavity. The at least one additional cavity further reduces the likelihood of liquid concrete flowing into the first cavity, i.e. it acts as a buffer.

According to the invention, the magnet holding member is configured to releasably hold the magnetic unit in a predetermined position with respect to the first cavity opening.

When the magnetic unit is not connected to the casting mold, in the predetermined position the magnet holding member is configured to hold the magnet contact surface of the magnetic unit at a distance from the first cavity opening inside the first cavity.

The distance between the magnet contact surface and the first cavity opening, or the contacting plane, allows for the provision of a pre-tension when the installation device and the magnetic unit are connected to the ferromagnetic part of the casting mold. When the installation device and the magnetic unit are connected to the casting mold the magnet contact surface will be flush with the first mold contact surface, thereby slightly pulling the installation device against the inner surface of the casting mold.

In an embodiment of the installation device, the main body comprises:
- a base wall having a first side and an opposite, second side, wherein the first side is configured to face the magnetic unit, and wherein the second side is configured to face an interior space of the installation component,
- a first transverse wall extending transverse from the first side of the base wall and having a first wall height, wherein a free end of the first transverse wall extends up to the first cavity opening and comprises the first mold contact surface,
   wherein the base wall and the first transverse wall define a first cavity section of the first cavity for accommodating at least a part of the magnetic unit.

In an embodiment of the installation device, the base wall comprises a through hole, and wherein a second cavity section is defined by a second cavity section wall extending from the second side of the base wall, the first cavity section and the second cavity section being connected to each other via the through hole, wherein the first cavity section is configured to accommodate a disc-shaped part of the magnetic unit, and wherein the second cavity section is configured to accommodate a transverse elongate protrusion of the magnetic unit, the elongate protrusion extending from a centre of the disc-shaped part.

In an embodiment of the installation device, the second cavity section wall comprises the magnet holding member, the magnet holding member comprising a rib extending from the second cavity section wall into the second cavity section, the rib being configured to engage and hold the elongate protrusion of the magnetic unit. The provision of a rib is easy to manufacture and requires little material, thereby being cost-effective.

In an embodiment of the installation device, the second cavity section wall is elastically deformable for increasing a cross-sectional area of the second cavity section at the rib. This way, a widening part of an elongate protrusion of the magnetic unit may easily snap in and out of the magnet holding member.

In an embodiment of the installation device, the main body is at least partially elastically deformable for allowing the magnetic unit to move in a first direction from the magnet holding member to the first cavity opening upon the exertion of a predetermined force on the magnet holding member by the magnetic unit in the first direction while the magnetic unit is held by the magnet holding member. This way the pre-tension can be effectively achieved when the magnet contact surface becomes flush with the contacting plane when the installation device and magnetic unit are connected to the inner surface of the casting mold.

In an embodiment of the installation device, the second cavity section wall is elastically deformable for allowing the magnetic unit to move in the direction from the magnet holding member to the first cavity opening.

In an embodiment of the installation device, the main body comprises at least one additional cavity that extends inwards from the contacting plane and extends around the first cavity about a central axis perpendicular to the contacting plane. The at least one additional cavity further decreases the likelihood of liquid concrete coming into contact with the magnetic unit during the concrete casting process. Each additional cavity will further decrease said likelihood.

In an embodiment of the installation device, the main body comprises an additional cavity wall extending transverse from the first side of the base wall, wherein a free end of the additional cavity wall extends up to the contacting plane and comprises an additional mold contact surface, wherein the additional cavity is defined by the base wall, the first transverse wall, and the additional cavity wall.

In an embodiment of the installation device, the magnet holding member is configured to release the magnetic unit upon the exertion of a threshold pulling force on the magnetic unit in a direction from the magnet holding member to the first cavity opening, wherein the threshold pulling force is lower than a magnetic force between the magnetic unit and the casting mold when the magnetic unit is magnetically connected thereto. Having the threshold pulling force that is lower than the magnetic force allows the installation device to be removed from the casting mold together with the cast component while keeping the magnetic unit magnetically connected to the ferromagnetic part of the casting mold. Afterwards, the magnetic unit can be easily retrieved from the casting mold.

In an embodiment of the installation device, the installation device comprises a connecting member configured to connect the installation device to an installation component, wherein the connecting member is configured to provide a liquid-tight connection between the installation component and the installation device for preventing an ingress of liquid into an interior space of the installation component.

In an embodiment of the installation device, the first transverse wall has a substantially ring-shaped cross-section when seen on the contacting plane.

In an embodiment of the installation device, wherein the second cavity section wall defines a second section inner space having a height corresponding to a height of the elongate protrusion of the magnetic unit, a first width corresponding to a maximum width of the elongate protrusion, and a second width corresponding to at least three times the maximum width of the elongate protrusion, the second width being perpendicular to the first width. With the second width being at least three times the maximum width of the elongate protrusion, a cross-section of the second section inner space can be effectively increased at the widening part of the elongate protrusion. This is beneficial for the snapping in and out of the magnet holding member.

In an embodiment of the installation device, an installation component is integrally connected with the installation device. An integral connection is beneficial from a manufacturing point of view, because the integral installation device and installation component can be made with a single mold when for example injection moulding is used.

In an embodiment of the installation device, the integral connection between the installation device and the installation component is a tearable connection configured to provide a tearable disconnection of the installation device from the installation component. With a tearable connection the installation device can be easily disconnected from the installation component after the cast component is installated at the remote construction site.

In an embodiment of the installation device, when the installation device is magnetically connected to the casting mold via the magnet contact surface and the first cavity opening and the first cavity are closed, the first cavity accommodates the magnetic unit and air, wherein the air is in particular located between the magnetic unit and the first cavity wall.

In a second aspect the invention provides an assembly of an installation device according to the invention and a magnetic unit, wherein the magnetic unit is releasably held in the first cavity. The assembly provides the same advantageous as the installation device according to the first aspect of the invention.

In an embodiment of the assembly, the magnetic unit is in the predetermined position with respect to the contacting plane.

In an embodiment of the assembly, the distance between the contacting plane and the mold contact surface of the magnetic unit is greater than 0 mm.

In an embodiment of the assembly, a layer of air is present between a side face of the magnetic unit and a transverse wall of the first cavity adjacent the first cavity opening. If during the concrete casting process liquid concrete would enter the first cavity via the first cavity opening the layer of air is compressed. This compression of air limits a further ingress of liquid concrete into the first cavity, as the compressed air in a sense wants to push the liquid concrete out of the first cavity.

In an embodiment the assembly comprises an installation device according to the invention, wherein the magnetic unit comprises a substantially disc-shaped permanent magnet part configured to be accommodated in the first cavity section, and an elongate protrusion extending from a centre of the disc-shaped part, the elongate protrusion being configured to be accommodated in the second cavity section.

In an embodiment the assembly, the elongate protrusion comprises a widening part configured to be engaged by the rib of the magnet holding member.

In a third aspect the invention provides a concrete casting system, comprising:
- an at least partially ferromagnetic casting mold,
- a magnetic unit magnetically connected to a ferromagnetic part of the casting mold,
- an installation device according to the invention, wherein the installation device is releasably connected to the magnetic unit, the magnetic unit being accommodated in the first cavity and releasably held by the magnet holding member.

The invention further provides a method of casting a concrete component with an installation component, the method comprising the steps of
a. providing a magnetic unit on an inside of a casting mold via a magnetic connection,
b. providing an installation device according to the invention,
c. positioning the installation device over the magnetic unit such that the magnetic unit is accommodated in the first cavity and releasably held by the magnet holding member in the predetermined position,
d. casting concrete in the casting mold and around the installation device,
wherein prior to step d. an installation component to be installed in the concrete component is connected with the installation device.

The method according to the invention advantageously decreases the likelihood of an ingress of liquid concrete into the first cavity. Therefore, with the installation device according to the invention the magnetic unit may become less dirty and requires less cleaning. This improves the reusability of the magnetic unit.

In an embodiment of the method, step a. is performed by a robot.

In an embodiment the method further comprises moving the casting mold and a cast concrete component away from each other, wherein the magnetic unit remains magnetically connected to the casting mold and the installation device remains connected to the cast concrete component. This way the magnetic unit can be easily retrieved after use and be reused.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1A schematically shows an exploded perspective view of an embodiment of an assembly according to the invention comprising an embodiment of an installation device according to the invention.
Figure 1B schematically shows a partial cross-section of the embodiment of figure 1A in an assembled configuration.
Figure 1C schematically shows detail B as indicated in figure 1B.
Figure 2 schematically shows a cross-section of an embodiment of an assembly according to the invention comprising an embodiment of an installation device according to the invention.
Figure 3 schematically shows a cross-sectional view of detail A as shown in figure 2.
Figure 4 schematically shows a cross-sectional view of detail B as shown in figure 2.
Figure 5 schematically shows an exploded perspective view of another embodiment of an assembly according to the invention comprising another embodiment of an installation device according to the invention.
Figure 6 schematically shows a cross-section of the assembly of figure 5, wherein the installation device comprises a first cavity without an additional cavity.
Figure 7 schematically show a cross-sectional view of detail B as shown in figure 6.
Figure 8 schematically shows a cross-section of an embodiment of an assembly according to the invention comprising an embodiment of an installation device according to the invention comprising a first cavity and one additional cavity.
Figure 9 schematically show a cross-sectional view of detail B as shown in figure 8.
Figure 10 schematically shows a cross-section of an embodiment of an assembly according to the invention comprising an embodiment of an installation device according to the invention comprising a first cavity and three additional cavities.
Figure 11 schematically show a cross-sectional view of detail B as shown in figure 10.
Figure 12 schematically shows an exploded view of an embodiment of an assembly according to the invention, wherein the installation device is integrally connected to an electrical component.
Figures 13 to 15 schematically show bottom views of the embodiments of the installation device as shown in figures 6, 2 and 10, respectively.

### DETAILED DESCRIPTION OF THE FIGURES

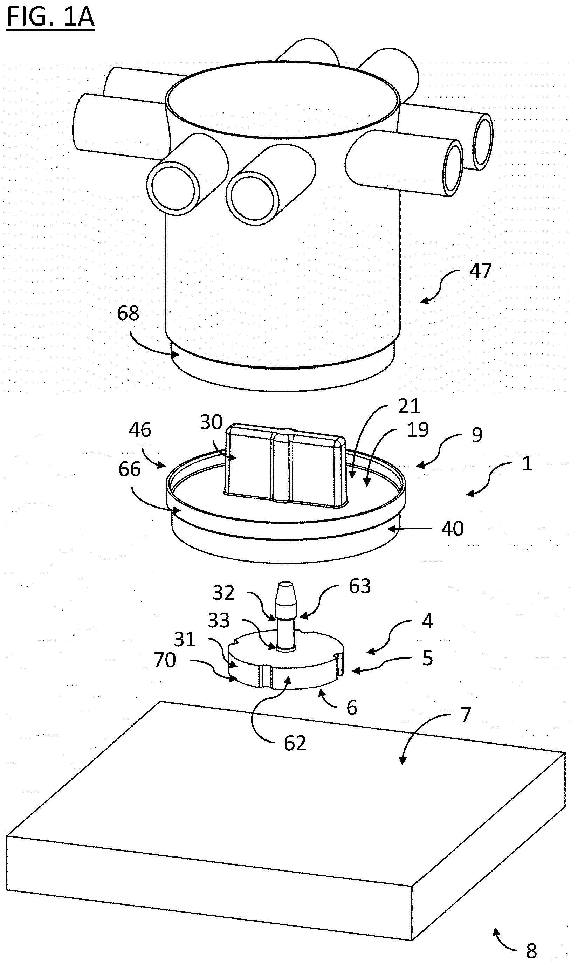

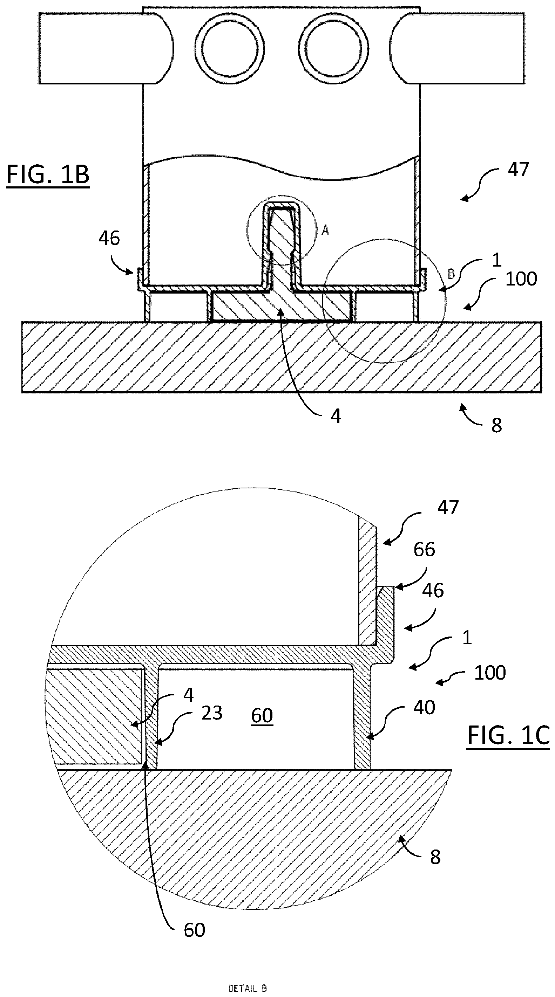

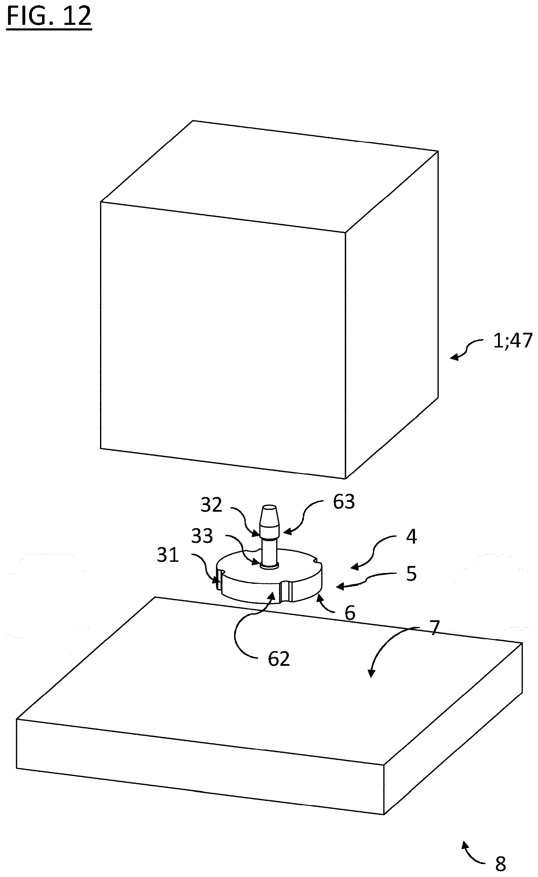

Figures 1 to 12 disclose different embodiments of an assembly 100 according to the invention comprising a magnetic unit 4 and different embodiments of an installation device 1 according to the invention. The assembly 100 is configured to keep an installation component 47 like an installation box in a desired position and at a desired location on a casting mold 8 during a concrete casting process.

The installation device 1 is configured to be accommodated in a concrete component, in particular a concrete wall, to be cast. A ceiling and a floor are also considered walls. The installation device 1 is configured to releasably hold the magnetic unit 4. The magnetic unit 4 comprises a permanent magnet 5 having a magnet contact surface 6. The magnetic unit 4 is configured to magnetically connect to a ferromagnetic part 7 of a casting mold 8 via the magnet contact surface 6.

The installation device 1 comprises a main body 9 comprising a first cavity 10 configured for accommodating the magnetic unit 4 in an inner space 11 of the first cavity 10. The first cavity 10 extends inwards from a first cavity opening 12 at a contacting plane 13. The first cavity opening 12 allows the magnetic unit 4 to be inserted into, and removed from, the first cavity 10.

The main body 9 comprises a first mold contact surface 14 extending around the first cavity opening 12. When the installation device 1 is magnetically connected to a casting mold 8 via the magnet contact surface 6, the first mold contact surface 14 contacts an inner surface 16 of the casting mold 8 whereby the inner surface 16 closes the first cavity opening 12 and the first cavity 10. 'Closes' here means that the inner space 11 of the first cavity 10 is completely enclosed by the first cavity 10 and the inner surface 16 of the casting mold 8. The first cavity 10 has, apart from the first cavity opening 12, no other openings.

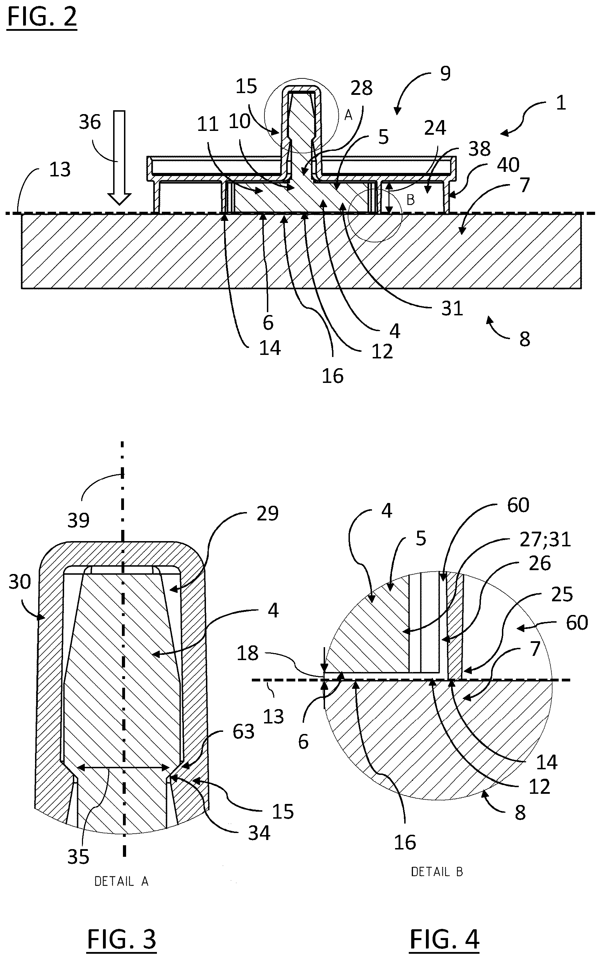

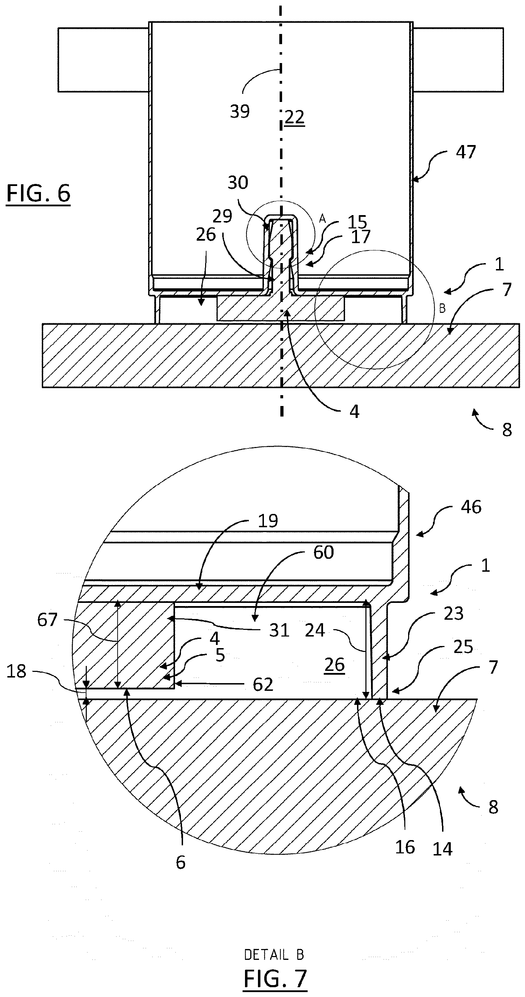

When the installation device 1 is magnetically connected to the casting mold 8 via the magnet contact surface 6 at least one layer of air 60 extends around the magnetic unit, in particular completely around the magnetic unit, wherein the at least one layer of air is enclosed by the main body 9, e.g. the base wall 19 and transverse wall 23, and by the inner surface 16 of the casting mold 8. In figures 4 and 7 for example the first cavity opening 12 and the first cavity 10 are closed by the inner surface 16, wherein a layer of air 60 is present between a side face 62 of the magnetic unit 4 and a transverse wall of the first cavity 10 adjacent the first cavity opening 12. An inner diameter of the first cavity opening 12 is greater than a maximum outer diameter of the magnetic unit 4, or in other words, an inner circumference 69 of the first mold contact surface is greater than an outer circumference 70 of the magnet contact surface. This way, when the installation device is magnetically connected to the casting mold via the magnet contact surface, the layer of air 60 extends around the magnetic unit, in particular completely around the magnetic unit, and is enclosed in the first cavity by the inner surface of the mold.

The layer of air 60 helps in reducing an ingress of liquid concrete into the first cavity 10, because when liquid concrete would enter the first cavity 10 via the first cavity opening 12, the layer of air 60 is slightly compressed. The air 60 is compressed, because the first cavity 10 has no other opening apart from the first cavity opening 12. The slightly compressed air 60 prevents the liquid concrete to move further into the first cavity 10 and along the side face 62 of the magnetic unit 4.

The main body may comprise at least one additional cavity 38A, 38B, 38C that extends inwards from the contacting plane and extends around the first cavity about a central axis 39 perpendicular to the contacting plane. Instead of or in addition to the layer of air 60 enclosed in the first cavity by the inner surface of the casting mold 8, at least one layer of air 60 extends around the magnetic unit and is enclosed in the at least one additional cavity 38 by the inner surface of the casting mold 8.

A layer of air 60 may be present between the transverse wall of the first cavity 10 and the magnetic unit 4, and/or between the first transverse wall 23 of the first cavity 10 and an additional cavity wall 40, and/or between two adjacent additional cavity walls 40A, 40B, 40C in case there is at least one additional cavity 38. The more additional cavities and separate layers, or pockets, of air 60 are provided around the magnetic unit 4, the lower the likelihood of ingress of liquid concrete into the first cavity 10 becomes and consequently contamination of the magnetic unit. The additional cavities are also closed off by the casting mold 8 when the installation device 1 is connected thereto via the magnetic unit 4.

The main body 9 may comprise a base wall 19 having a first side 20 and an opposite, second side 21. The first side 20 is configured to face the magnetic unit 4. The second side 21 is configured to face an interior space 22 of the installation component 47. A first transverse wall 23 extends transverse from the first side 20 of the base wall 19. The first transverse wall 23 has a first wall height 24. A free end 25 of the first transverse wall 23 extends up to the first cavity opening 12 and comprises the first mold contact surface 14. The base wall 19 and the first transverse wall 23 define a first cavity section 26 of the first cavity 10 for accommodating at least a part of the magnetic unit 4, here a disc-shaped part 31.

The base wall 19 has a through hole 28. A second cavity section 29 is defined by a second cavity section wall 30 extending from the second side 21 of the base wall 19. The first cavity section 26 and the second cavity section 29 are connected to each other via the through hole 28. The first cavity section 26 is configured to accommodate the disc-shaped part 31 of the magnetic unit 4, and wherein the second cavity section 29 is configured to accommodate a transverse elongate protrusion 32 of the magnetic unit 4, the elongate protrusion 32 extending from a centre 33 of the disc-shaped part 31.

The magnetic unit 4 comprises a substantially disc-shaped permanent magnet 5 part and an elongate protrusion 32 extending from a centre 33 of the disc-shaped part 31. The disc-shaped permanent magnet 5 part is accommodated in the first cavity section 26. The elongate protrusion 32 is accommodated in the second cavity section 29. A height 67 of the disc-shaped part 31 is smaller than a height of the first transverse wall 23, see figure 7.

The main body 9 further comprises a magnet holding member 15 configured to releasably hold the magnetic unit 4 within the first cavity 10.

The magnet holding member 15 is configured to releasably hold the magnetic unit 4 in a predetermined position 17 with respect to the first cavity opening 12.

The second cavity section wall 30 comprises the magnet holding member 15. The magnet holding member 15 comprises a rib 34 extending from the second cavity section wall 30 into the second cavity section 29. The rib 34 is configured to engage and hold the elongate protrusion 32 of the magnetic unit 4, in particular a widening part 63 located at a free end of the elongate protrusion 32. This is for example shown in figure 3, wherein the inwardly extending rib 34 engages a tapered section of the widening part 63. An angle of the tapered section corresponds to an engaging angle of the rib 34. If the widening part 63 moves in a first direction 36 towards the first cavity opening 12, the tapered section pushes the rib 34 outwardly.

The second cavity section wall 30 of the main body 9 is elastically deformable for increasing a cross-sectional area 35 of the second cavity section 29 at the rib 34. The increase in cross-sectional area 35 at the rib 34 allows the elongate protrusion 32 to snap in and out of the magnet holding member 15.

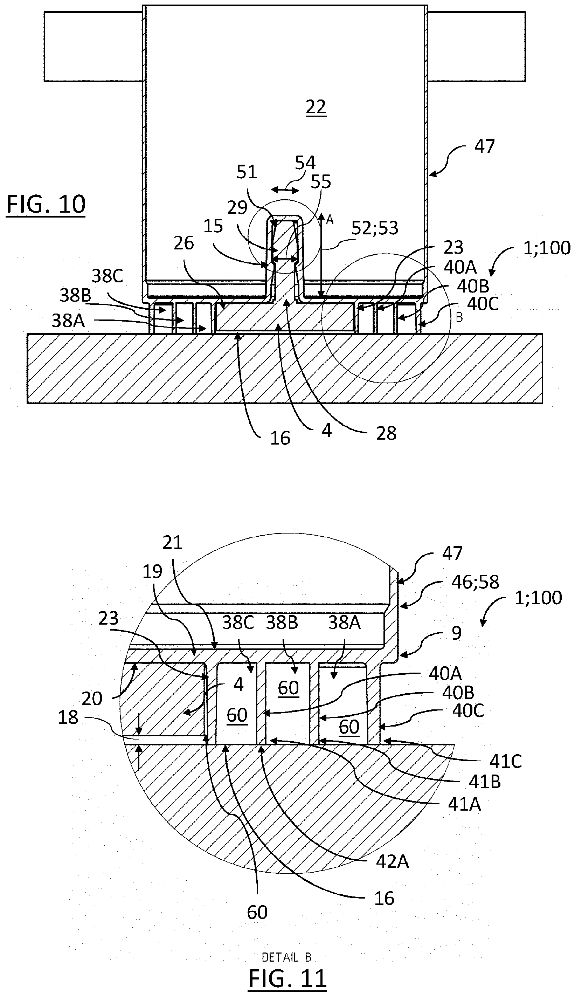

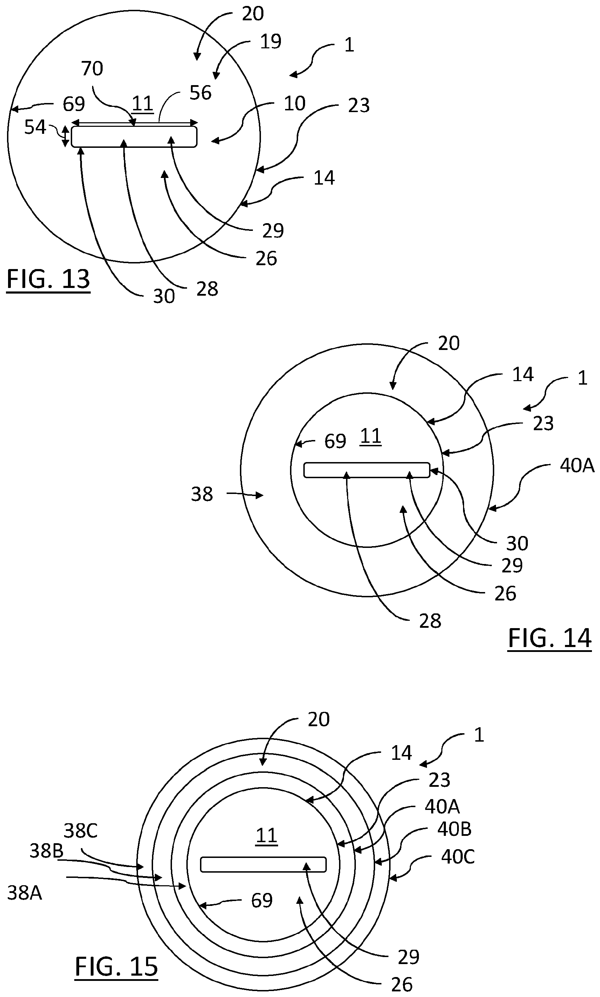

Turning to figures 10 and 13, the second cavity section wall 30 defines a second section inner space 51 having a height 52 corresponding to a height 53 of the elongate protrusion 32 of the magnetic unit 4. A first width 54 of the second section inner space 51 corresponds to a maximum width 55 of the elongate protrusion 32. A second width 56 of the second section inner space 51 corresponds to at least three times the maximum width 55 of the elongate protrusion 32. The second width 56 extends perpendicular to the first width 54, see figure 13. With these exemplary dimensions the cross-sectional area 35 at the rib 34 can be increased in an effective way for allowing the widening part 63 of the protrusion to snap in and out of the magnet holding member 15. The second width 56 allows a mid-section 70 of the second cavity section 29 to slightly increase in cross-section. This slight increase allows the magnetic unit 4 to be released from the magnet holding member 15.

The magnet holding member 15 is configured to release the magnetic unit 4 upon the exertion of a threshold pulling force on the magnetic unit 4 in the first direction 36 from the magnet holding member 15 to the first cavity opening 12. The threshold pulling force is lower than a magnetic force between the magnetic unit 4 and the casting mold 8 when the magnetic unit 4 is magnetically connected thereto.

In practice, the magnetic unit 4 will be in contact with the ferromagnetic part 7 of the casting mold 8, but for explanatory purposes the magnetic unit 4 is shown in a predetermined position 17 when it is not in contact with the casting mold 8. In practice the magnetic unit 4 will usually be connected first to the ferromagnetic part 7 of the casting mold 8, after which the installation device 1 is positioned over the magnetic unit 4. The installation device 1 is therefore in a sense pressed onto the magnetic unit 4 while the magnetic unit 4 remains magnetically connected to the casting mold 8.

When the magnetic unit 4 is not connected to the casting mold 8, in the predetermined position 17 the magnet holding member 15 is configured to hold the magnet contact surface 6 of the magnetic unit 4 at a distance 18 from the first cavity opening 12 inside the first cavity 10. This is for example shown in figures 4, 7, 9, 11. The distance 18 between the contacting plane 13 and the magnet contact surface of the magnetic unit 4 is greater than 0 mm, for example between 0,1 mm - 2 mm.

The distance 18 allows for the provision of a pre-tension force when the assembly of the installation device 1 and the magnetic unit 4 are connected to the casting mold 8. The pre-tension force in a sense biases the installation device 1 against the inner surface 16 of the casting mold 8.

The main body 9 is at least partially elastically deformable for allowing the magnetic unit 4 to move in a first direction 36 from the magnet holding member 15 to the first cavity opening 12 upon the exertion of a predetermined force on the magnet holding member 15 by the magnetic unit 4 in the first direction 36 while the magnetic unit 4 is held by the magnet holding member 15.

In particular the second cavity section wall 30 is elastically deformable for allowing the magnetic unit 4 to move the pre-tension distance 18 in the first direction 36 from the magnet holding member 15 to the first cavity opening 12, in particular up to the contacting plane 13.

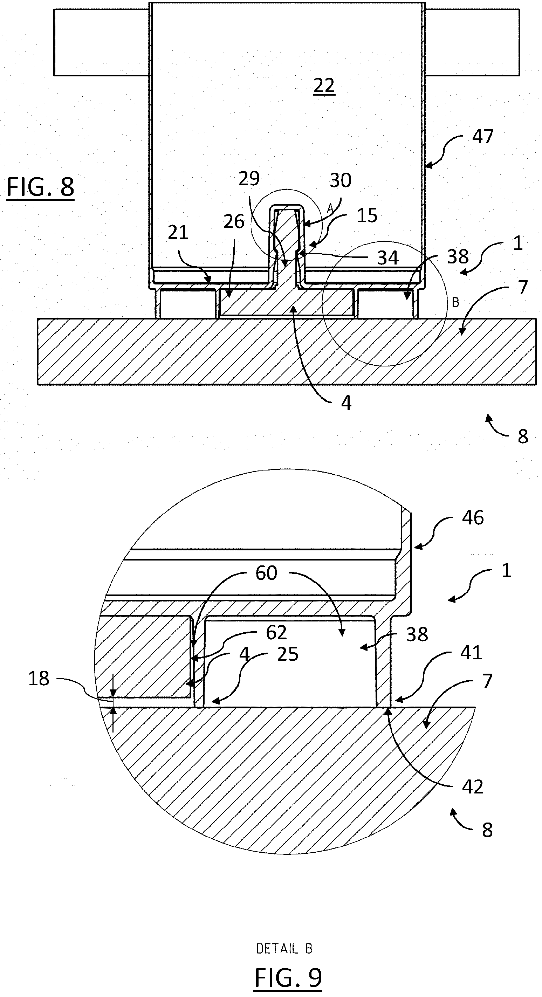

In the embodiments as shown in figures 8 to 11 the main body 9 comprises at least one additional cavity 38, 38A, 38B, 38C. Figures 8 shows the main body 9 comprising one additional cavity 38, whereas figure 10 shows an embodiment comprising three additional cavities 38A, 38B, 38C. The at least one additional cavity 38 extends inwards from the contacting plane 13 and extends around the first cavity 10 about a central axis 39 perpendicular to the contacting plane 13.

The at least one additional cavity 40, 40A, 40B, 40C each have only one additional cavity opening at the contacting plane. The at least one additional cavity has, like the first cavity, no further opening apart from said additional cavity opening.

Figures 14 and 15 schematically show the embodiments of figures 8 and 10 respectively, but then in bottom view.

The main body 9 comprises an additional cavity wall 40, 40A, 40B, 40C extending transverse from the first side 20 of the base wall 19. A free end 41, 41A, 41B, 41C of the additional cavity wall 40, 40A, 40B, 40C extends up to the contacting plane 13, and comprises an additional mold contact surface 42. The additional cavity 38 is defined by the base wall 19, the first transverse wall 23, and the additional cavity wall 40. Further additional cavities are defined by two adjacent additional cavity walls 40A, 40B, 40C and the base wall 19 as shown in figures 10 and 11.

The first transverse wall 23 has a substantially ring-shaped cross-section when seen on the contacting plane 13, or in bottom view as shown in figures 13 to 15. In case the main body 9 comprises at least one additional cavity wall 40, the at least one additional cavity wall 40 also has a substantially ring-shaped cross-section when seen on the contacting plane 13. This is schematically shown in the bottom views of figures 13 to 15 for respectively the embodiments of the installation devices 1 as shown in figures 6, 8 and 10.

The installation device 1 comprises a connecting member 46 configured to connect the installation device 1 to an installation component 47. The connecting member 46 is configured to provide a liquid-tight connection between the installation component 47 and the installation device 1 for preventing or at least reducing an ingress of liquid into an interior space 22 of the installation component 47.

Before pouring of the concrete in the casting mold 8, an installation component 47 is connected with the installation device 1. This can be done as shown in figures 1A to 1C, wherein the installation device 1 and the installation component 47 are two separate parts that are connected via a connecting member 46. An advantage of having separate parts, is that the installation device 1 may be easier to reuse. In the shown embodiment of figures 1A to 1C the connecting member 46 comprises a connection wall 66 extending around the circumference of the main body 9 of the installation device 1, in particular extending from the second side 21 of the base wall 19. In order to connect the installation device 1 to the installation component 47 the connection wall 66 slides over a corresponding wall part 68 of the installation component 47, here an installation box. The connection wall 66 may, depending on its diameter, be configured to slide over an outside (figure 1B) or an inside of the corresponding wall part 68.

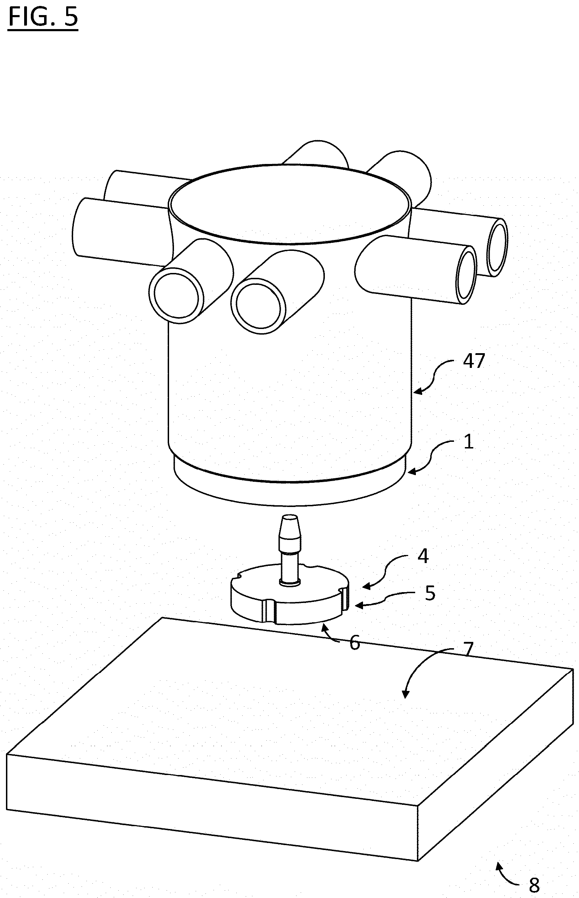

It may also be possible to have an integral connection between the installation device 1 and the installation component 47. Such an integral connection 46 is shown in the embodiments of figures 5 to 12. An advantage of an integral connection may be that if injection moulding is used as a manufacturing method, the installation device 1 and installation component 47 can be manufactured using only one mold.

The integral connection may for example be a tearable connection 58 configured to provide a tearable disconnection of the installation device 1 from the installation component 47 after the concrete component is cast and removed from the casting mold 8. The installation device 1 may for example be disconnected after installation of the concrete component at the remote construction site. The integral connection decreases the likelihood of an ingress of dirt inside the interior space 22 of the installation component 47.

Figures 1 to 12 also schematically show a part of a concrete casting system according to the invention. The concrete casting system comprises an at least partially ferromagnetic casting mold 8. In the figures 1 to 12 a ferromagnetic part 7 of the casting mold 8 is shown. The system comprises a magnetic unit 4 magnetically connected to a ferromagnetic part 7 of the casting mold 8, and an installation device 1. The installation device 1 is releasably connected to the magnetic unit 4. The magnetic unit 4 is accommodated in the first cavity 10 and releasably held by the magnet holding member 15.

In a method of casting a concrete component with an installation component 47, the method comprises the steps of
a. providing a magnetic unit 4 on an inside of a casting mold 8 via a magnetic connection, for example via a robot.
b. providing an installation device 1,
c. positioning the installation device 1 over the magnetic unit 4 such that the magnetic unit 4 is accommodated in the first cavity 10 and releasably held by the magnet holding member 15 in the predetermined position 17,
d. casting concrete in the casting mold 8 and around the installation device 1,
wherein prior to step d. an installation component 47 to be installed in the concrete component is connected with the installation device 1.

The installation component 47 and installation device 1 can be two separate parts that are connected to each other via a connecting member 46. It is also possible to integrally connect the installation device 1 to the installation component 47, for example during an injection moulding process.

When the concrete is hardened, the cast concrete component is moved away from the casting mold 8. When the magnetic force between the magnetic unit and the ferromagnetic part of the casting mold is greater than the threshold pulling force between the magnet holding member and the magnetic unit, the magnetic unit 4 remains magnetically connected to the casting mold 8 and the installation device 1 remains connected to the cast concrete component, as well as to the installation component 47. The magnetic unit 4 is then retrieved and can be used again.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. An installation device (1) to be accommodated in a concrete component, in particular a concrete wall, to be cast, the installation device being configured to releasably hold a magnetic unit (4), the magnetic unit comprising a permanent magnet (5) having a magnet contact surface (6) being configured to magnetically connect to a ferromagnetic part (7) of a casting mold (8), the installation device comprising a main body (9) comprising:
- a first cavity (10) configured for accommodating the magnetic unit in an inner space (11) of the first cavity, wherein the first cavity extends inwards from a first cavity opening (12) at a contacting plane (13), the first cavity opening being configured to allow the magnetic unit to be inserted into, and removed from, the first cavity,
- a first mold contact surface (14) extending around the first cavity opening,
- a magnet holding member configured to releasably hold the magnetic unit within the first cavity,
wherein, when the installation device is magnetically connected to a casting mold via the magnet contact surface, the first mold contact surface contacts an inner surface (16) of the casting mold whereby the inner surface closes the first cavity opening and the first cavity,
wherein the magnet holding member is configured to releasably hold the magnetic unit in a predetermined position (17) with respect to the first cavity opening,
**characterised in that**
- when the magnetic unit is not connected to the casting mold, in the predetermined position the magnet holding member is configured to hold the magnet contact surface of the magnetic unit at a distance (18) from the first cavity opening inside the first cavity,
and/or
- the main body comprises at least one additional cavity (38) that extends inwards from the contacting plane and extends around the first cavity about a central axis (39) perpendicular to the contacting plane.

2. Installation device according to claim 1, wherein, when the installation device is magnetically connected to the casting mold via the magnet contact surface, at least one layer of air (60) extends around the magnetic unit, wherein the at least one layer of air is enclosed by the main body (9) and the inner surface of the mold.

3. Installation device according to claim 1 or 2, wherein
- an inner circumference (69) of the first mold contact surface is configured to be greater than an outer circumference (70) of the magnet contact surface, such that, when the installation device is magnetically connected to the casting mold via the magnet contact surface, a layer of air extends around the magnetic unit and is enclosed in the first cavity by the inner surface of the mold,
and/or wherein
- the main body comprises at least one additional cavity (38) that extends inwards from the contacting plane and extends around the first cavity about a central axis (39) perpendicular to the contacting plane, and wherein at least one layer of air extends around the magnetic unit and is enclosed in the at least one additional cavity by the inner surface of the mold.

4. Installation device according to any one of the preceding claims, wherein the main body is at least partially elastically deformable for allowing the magnetic unit to move in a first direction (36) from the magnet holding member to the first cavity opening upon the exertion of a predetermined force on the magnet holding member by the magnetic unit in the first direction while the magnetic unit is held by the magnet holding member.

5. Installation device according to any one of the preceding claims, wherein the installation device comprises a connecting member (46) configured to connect the installation device to an installation component (47), wherein the connecting member is configured to provide a liquid-tight connection between the installation component and the installation device for preventing an ingress of liquid into an interior space (22) of the installation component.

6. Installation device according to any one of the preceding claims, wherein an installation component is integrally connected with the installation device, wherein the integral connection between the installation device and the installation component is a tearable connection (58) configured to provide a tearable disconnection of the installation device from the installation component.

7. Assembly (100) of an installation device (1) according to any one of the preceding claims and a magnetic unit (4), wherein the magnetic unit is releasably held in the first cavity.

8. Assembly according to the preceding claim, wherein the magnetic unit is in the predetermined position with respect to the contacting plane, wherein the distance between the contacting plane and the mold contact surface of the magnetic unit is greater than 0 mm.

9. Assembly according to any one of the preceding assembly claims, wherein a layer of air (60) is present between a side face (62) of the magnetic unit and a transverse wall (23) of the first cavity adjacent the first cavity opening.

10. Assembly according to the preceding claim, comprising an installation device according to any one of the preceding claims, wherein the magnetic unit comprises a substantially disc-shaped permanent magnet part configured to be accommodated in a first cavity section, and an elongate protrusion extending from a centre of the disc-shaped part, the elongate protrusion being configured to be accommodated in a second cavity section, wherein the elongate protrusion comprises a widening part configured to be engaged by a rib of the magnet holding member.

11. Concrete casting system, comprising:
- an at least partially ferromagnetic casting mold (8),
- a magnetic unit (4) magnetically connected to a ferromagnetic part (7) of the casting mold,
- an installation device (1) according to any one of claims 1-6, wherein the installation device is releasably connected to the magnetic unit, the magnetic unit being accommodated in the first cavity and releasably held by the magnet holding member.

12. Method of casting a concrete component with an installation component, the method comprising the steps of
a. providing a magnetic unit (4) on an inside of a casting mold (8) via a magnetic connection,
b. providing an installation device according to any one of claims 1-6,
c. positioning the installation device over the magnetic unit such that the magnetic unit is accommodated in the first cavity and releasably held by the magnet holding member in the predetermined position,
d. casting concrete in the casting mold and around the installation device,
wherein prior to step d. an installation component to be installed in the concrete component is connected with the installation device.

## Patentansprüche

1. Installationsvorrichtung (1), die in einer zu gießenden Betonkomponente, insbesondere in einer zu gießenden Betonwand, aufgenommen werden soll, wobei die Installationsvorrichtung konfiguriert ist, eine Magneteinheit (4) lösbar zu halten, wobei die Magneteinheit einen Permanentmagneten (5) umfasst, der eine Magnetberührungsfläche (6) aufweist, die konfiguriert ist, mit einem ferromagnetischen Teil (7) einer Gießform (8) magnetisch zu verbinden, wobei die Installationsvorrichtung einen Hauptkörper (9) umfasst, der Folgendes umfasst:
- einen ersten Hohlraum (10), der konfiguriert ist, die Magneteinheit in einem Innenraum (11) des ersten Hohlraums aufzunehmen, wobei der erste Hohlraum von einer Öffnung (12) des ersten Hohlraums bei einer Berührungsebene (13) nach innen verläuft, wobei die Öffnung des ersten Hohlraums konfiguriert ist zu ermöglichen, dass die Magneteinheit in den ersten Hohlraum eingeführt und aus ihm entnommen wird,
- eine erste Formberührungsfläche (14), die um die Öffnung des ersten Hohlraums verläuft,
- ein Magnethalteelement, das konfiguriert ist, die Magneteinheit lösbar in dem ersten Hohlraum zu halten,
wobei dann, wenn die Installationsvorrichtung über die Magnetberührungsfläche mit einer Gießform magnetisch verbunden ist, die erste Formberührungsfläche eine Innenoberfläche (16) der Gießform berührt, wodurch die Innenoberfläche die Öffnung des ersten Hohlraums und den ersten Hohlraum verschließt,
wobei das Magnethalteelement konfiguriert ist, die Magneteinheit in Bezug auf die Öffnung des ersten Hohlraums in einer vorgegebenen Position (17) lösbar zu halten, **dadurch gekennzeichnet, dass**
- dann, wenn die Magneteinheit nicht mit der Gießform verbunden ist, das Magnethalteelement in der vorgegebenen Position konfiguriert ist, die Magnetberührungsfläche der Magneteinheit in einem Abstand (18) von der Öffnung des ersten Hohlraums in dem ersten Hohlraum zu halten,
und/oder
- der Magnetkörper wenigstens einen zusätzlichen Hohlraum (38) umfasst, der von der Berührungsebene nach innen verläuft und um eine Mittelachse (39) senkrecht zu der Berührungsebene um den ersten Hohlraum verläuft.

2. Installationsvorrichtung nach Anspruch 1, wobei um die Magneteinheit dann, wenn die Installationsvorrichtung über die Magnetberührungsfläche mit der Gießform magnetisch verbunden ist, wenigstens eine Luftschicht (60) verläuft, wobei die wenigstens eine Luftschicht durch den Hauptkörper (9) und die Innenoberfläche der Form eingeschlossen ist.

3. Installationsvorrichtung nach Anspruch 1 oder 2, wobei
- ein Innenumfang (69) der ersten Formberührungsfläche größer als ein Außenumfang (70) der Magnetberührungsfläche konfiguriert ist, so dass um die Magneteinheit dann, wenn die Installationsvorrichtung über die Magnetberührungsfläche mit der Gießform magnetisch verbunden ist, eine Luftschicht verläuft und durch die Innenoberfläche der Form in dem ersten Hohlraum eingeschlossen ist,
und/oder wobei
- der Hauptkörper wenigstens einen zusätzlichen Hohlraum (38) umfasst, der von der Berührungsebene nach innen verläuft und um eine Mittelachse (39) senkrecht zu der Berührungsebene um den ersten Hohlraum verläuft, und wobei um die Magneteinheit wenigstens eine Luftschicht verläuft und durch die Innenoberfläche der Form in dem wenigstens einen zusätzlichen Hohlraum eingeschlossen ist.

4. Installationsvorrichtung nach einem der vorhergehenden Ansprüche, wobei der Hauptkörper wenigstens teilweise elastisch verformbar ist, um zu ermöglichen, dass sich die Magneteinheit beim Ausüben einer vorgegebenen Kraft auf das Magnethalteelement durch die Magneteinheit in der ersten Richtung, während die Magneteinheit durch das Magnethalteelement gehalten ist, in einer ersten Richtung (36) von dem Magnethalteelement in die Öffnung des ersten Hohlraums bewegt.

5. Installationsvorrichtung nach einem der vorhergehenden Ansprüche, wobei die Installationsvorrichtung ein Verbindungselement (46) umfasst, das konfiguriert ist, die Installationsvorrichtung mit einer Installationskomponente (47) zu verbinden, wobei das Verbindungselement konfiguriert ist, zwischen der Installationskomponente und der Installationsvorrichtung eine flüssigkeitsdichte Verbindung bereitzustellen, um das Eindringen von Flüssigkeit in den Innenraum (22) der Installationskomponente zu verhindern.

6. Installationsvorrichtung nach einem der vorhergehenden Ansprüche, wobei eine Installationskomponente mit der Installationsvorrichtung einteilig verbunden ist, wobei die einteilige Verbindung zwischen der Installationsvorrichtung und der Installationskomponente eine zerreißbare Verbindung (58) ist, die konfiguriert ist, eine zerreißbare Trennung der Installationsvorrichtung von der Installationskomponente bereitzustellen.

7. Anordnung (100) einer Installationsvorrichtung (1) nach einem der vorhergehenden Ansprüche und einer Magneteinheit (4), wobei die Magneteinheit in dem ersten Hohlraum lösbar gehalten ist.

8. Anordnung nach dem vorhergehenden Anspruch, wobei die Magneteinheit in Bezug auf die Berührungsebene in der vorgegebenen Position ist, wobei der Abstand zwischen der Berührungsebene und der Formberührungsfläche der Magneteinheit größer als 0 mm ist.

9. Anordnung nach einem der vorhergehenden Anordnungsansprüche, wobei zwischen einer Seitenfläche (62) der Magneteinheit und einer Querwand (23) des ersten Hohlraums benachbart zu der Öffnung des ersten Hohlraums eine Luftschicht (60) vorhanden ist.

10. Anordnung nach dem vorhergehenden Anspruch, die eine Installationsvorrichtung nach einem der vorhergehenden Ansprüche umfasst, wobei die Magneteinheit einen im Wesentlichen scheibenförmigen Permanentmagnetteil, der konfiguriert ist, in einem ersten Hohlraumabschnitt aufgenommen zu werden, und einen langgestreckten Vorsprung, der von einem Zentrum des scheibenförmigen Teils ausgeht, umfasst, wobei der langgestreckte Vorsprung konfiguriert ist, in einem zweiten Hohlraumabschnitt aufgenommen zu werden, wobei der langgestreckte Vorsprung einen Aufweitungsteil umfasst, der konfiguriert ist, mit einer Rippe des Magnethalteelements in Eingriff zu gelangen.

11. Betongießsystem, das Folgendes umfasst:
- eine wenigstens teilweise ferromagnetische Gießform (8),
- eine Magneteinheit (4), die mit einem ferromagnetischen Teil (7) der Gießform magnetisch verbunden ist,
- eine Installationsvorrichtung (1) nach einem der Ansprüche 1-6, wobei die Installationsvorrichtung mit der Magneteinheit lösbar verbunden ist, wobei die Magneteinheit in dem ersten Hohlraum aufgenommen ist und durch das Magnethalteelement lösbar gehalten ist.

12. Verfahren zum Gießen einer Betonkomponente mit einer Installationskomponente, wobei das Verfahren die folgenden Schritte umfasst:
a. Bereitstellen einer Magneteinheit (4) auf einer Innenseite einer Gießform (8) über eine magnetische Verbindung,
b. Bereitstellen einer Installationsvorrichtung nach einem der Ansprüche 1-6,
c. Positionieren der Installationsvorrichtung über der Magneteinheit in der Weise, dass die Magneteinheit in dem ersten Hohlraum aufgenommen wird und durch das Magnethalteelement in der vorgegebenen Position lösbar gehalten wird,
d. Gießen von Beton in die Gießform und um die Installationsvorrichtung,
wobei eine in der Betonkomponente zu installierende Installationskomponente vor dem Schritt d. mit der Installationsvorrichtung verbunden wird.

## Revendications

1. Dispositif (1) d'installation à loger dans un composant en béton, notamment une paroi en béton, à mouler, le dispositif d'installation étant configuré pour maintenir de manière amovible une unité magnétique (4), l'unité magnétique comprenant un aimant permanent (5) ayant une surface (6) de contact d'aimant étant configuré pour se connecter magnétiquement à une partie ferromagnétique (7) d'un moule (8) de coulée, le dispositif d'installation comprenant un corps principal (9) comprenant :
- une première cavité (10) configurée pour recevoir l'unité magnétique dans un espace intérieur (11) de la première cavité, la première cavité s'étendant vers l'intérieur depuis une première ouverture (12) de cavité au niveau d'un plan (13) de contact, la première ouverture de cavité étant configurée pour permettre à l'unité magnétique d'être insérée dans la première cavité et d'en être retirée,
- une première surface (14) de contact du moule s'étendant autour de la première ouverture de cavité,
- un organe de maintien d'aimant configuré pour maintenir de manière amovible l'unité magnétique dans la première cavité,
dans lequel, lorsque le dispositif d'installation est connecté magnétiquement à un moule de coulée par l'intermédiaire de la surface de contact d'aimant, la première surface de contact du moule entre en contact avec une surface intérieure (16) du moule de coulée, la surface intérieure fermant ainsi la première ouverture de cavité et la première cavité,
l'organe de maintien d'aimant étant configuré pour maintenir de manière amovible l'unité magnétique dans une position prédéterminée (17) par rapport à la première ouverture de cavité, **caractérisé en ce que**
- lorsque l'unité magnétique n'est pas connectée au moule de coulée, dans la position prédéterminée l'organe de maintien d'aimant est configuré pour maintenir la surface de contact d'aimant de l'unité magnétique à une distance (18) de la première ouverture de cavité à l'intérieur de la première cavité,
et/ou
- le corps principal comprend au moins une cavité supplémentaire (38) s'étendant vers l'intérieur depuis le plan de contact et s'étendant autour de la première cavité autour d'un axe central (39) perpendiculaire au plan de contact.

2. Dispositif d'installation selon la revendication 1, dans lequel, lorsque le dispositif d'installation est relié magnétiquement au moule de coulée par l'intermédiaire de la surface de contact d'aimant, au moins une couche d'air (60) s'étend autour de l'unité magnétique, la ou les couches d'air étant enfermées par le corps principal (9) et la surface intérieure du moule.

3. Dispositif d'installation selon la revendication 1 ou 2, dans lequel :
- une circonférence intérieure (69) de la première surface de contact du moule est configurée pour être supérieure à une circonférence extérieure (70) de la surface de contact d'aimant, de sorte que lorsque le dispositif d'installation est connecté magnétiquement au moule de coulée par l'intermédiaire de la surface de contact d'aimant, une couche d'air s'étend autour de l'unité magnétique et est enfermée dans la première cavité par la surface intérieure du moule,
et/ou dans lequel
- Le corps principal comprend au moins une cavité supplémentaire (38) s'étendant vers l'intérieur depuis le plan de contact et s'étendant autour de la première cavité autour d'un axe central (39) perpendiculaire au plan de contact, et dans lequel au moins une couche d'air s'étend autour de l'unité magnétique et est enfermée dans la ou les cavités supplémentaires par la surface interne du moule.

4. Dispositif d'installation selon l'une quelconque des revendications précédentes, le corps principal étant au moins partiellement déformable élastiquement pour permettre à l'unité magnétique de se déplacer dans une première direction (36) depuis l'organe de maintien d'aimant jusqu'à la première ouverture de cavité lors de l'application d'une force prédéterminée sur l'organe de maintien d'aimant par l'unité magnétique dans la première direction tandis que l'unité magnétique est maintenue par l'organe de maintien d'aimant.

5. Dispositif d'installation selon l'une quelconque des revendications précédentes, le dispositif d'installation comprenant un organe (46) de liaison configuré pour relier le dispositif d'installation à un composant (47) d'installation, l'organe de liaison étant configuré pour assurer une liaison étanche aux liquides entre le composant d'installation et le dispositif d'installation pour empêcher une entrée de liquide dans un espace intérieur (22) du composant d'installation.

6. Dispositif d'installation selon l'une quelconque des revendications précédentes, un composant d'installation étant relié d'un seul tenant au dispositif d'installation, la liaison d'un seul tenant entre le dispositif d'installation et le composant d'installation étant une liaison déchirable (58) configurée pour assurer une déconnexion déchirable du dispositif d'installation par rapport au composant d'installation.

7. Ensemble (100) d'un dispositif (1) d'installation selon l'une quelconque des revendications précédentes et d'une unité magnétique (4), l'unité magnétique étant maintenue de manière amovible dans la première cavité.

8. Ensemble selon la revendication précédente, l'unité magnétique se trouvant dans la position prédéterminée par rapport au plan de contact, la distance entre le plan de contact et la surface de contact du moule de l'unité magnétique étant supérieure à 0 mm.

9. Ensemble selon l'une quelconque des revendications d'ensemble précédentes, une couche d'air (60) étant présente entre une face latérale (62) de l'unité magnétique et une paroi transversale (23) de la première cavité adjacente à la première ouverture de cavité.

10. Ensemble selon la revendication précédente, comprenant un dispositif d'installation selon l'une quelconque des revendications précédentes, l'ensemble magnétique comprenant une partie d'aimant permanent sensiblement en forme de disque configurée pour être logée dans une première section de cavité, et une protubérance allongée s'étendant à partir d'un centre de la partie en forme de disque, la protubérance allongée étant configurée pour être logée dans une seconde section de cavité, la protubérance allongée comprenant une partie d'élargissement configurée pour subir l'interaction d'une nervure de l'organe de maintien d'aimant.

11. Système de coulée de béton, comprenant :
- un moule (8) de coulée au moins partiellement ferromagnétique,
- une unité magnétique (4) connectée magnétiquement à une partie ferromagnétique (7) du moule de coulée,
- un dispositif (1) d'installation selon l'une quelconque des revendications 1 à 6, le dispositif d'installation étant relié de manière amovible à l'unité magnétique, l'unité magnétique étant logée dans la première cavité et maintenue de manière amovible par l'organe de maintien d'aimant.

12. Procédé de coulée d'un composant en béton avec un composant d'installation, le procédé comprenant les étapes suivantes
a. mise en place d'une unité magnétique (4) sur un intérieur d'un moule (8) de coulée par l'intermédiaire d'une liaison magnétique,
b. mise en place d'un dispositif d'installation selon l'une quelconque des revendications 1-6,
c. positionnement du dispositif d'installation par-dessus l'unité magnétique de telle sorte que l'unité magnétique soit logée dans la première cavité et maintenue de manière amovible par l'organe de maintien d'aimant dans la position prédéterminée,
d. coulée de béton dans le moule de coulée et autour du dispositif d'installation,
un composant d'installation à installer dans le composant de béton étant relié au dispositif d'installation avant l'étape d.
